# EUROPÄISCHE PATENTSCHRIFT

(11) **EP 4 101 764 B1**
(45) Veröffentlichungstag und Bekanntmachung des Hinweises auf die Patenterteilung: **29.10.2025**
(21) Anmeldenummer: 22176600.9
(22) Anmeldetag: 01.06.2022
(51) Int. Cl.: B64D 11/06, B60N 3/00, B60N 2/02

(54) **TISCHEINRICHTUNG FÜR EIN FAHRZEUG**
TABLE DEVICE FOR A VEHICLE
DISPOSITIF FORMANT UNE TABLE POUR UN VÉHICULE

(30) Priorität: 10.06.2021 DE 102021114950
(43) Veröffentlichungstag der Anmeldung: 14.12.2022
(73) Patentinhaber: Lisa Dräxlmaier GmbH, 84137 Vilsbiburg (DE)
(72) Erfinder: Jonischkeit, Christoph, 84453 Mühldorf (DE)

(56) Entgegenhaltungen:
- WO-A1-2004/005069
- WO-A1-96/08985

## Beschreibung

### Technisches Gebiet

Die Erfindung betrifft eine Tischeinrichtung für ein Fahrzeug.

### Stand der Technik

Es ist bereits allgemein bekannt, Tische für Personen in Fahrzeugen vorzusehen, auf welchen diese Personen beispielsweise essen oder arbeiten können. Um einen Bauraum des jeweiligen Fahrzeugs besonders effizient nutzen zu können, kann es vorgesehen sein, dass die jeweilige Tischeinrichtung zwischen einer Verstaustellung und wenigstens einer Gebrauchsstellung, in welcher die Person die Tischeinrichtung nutzen kann, verstellt werden kann.

Die WO 96/08985 A1 offenbart eine Tischeinrichtung gemäß dem Oberbegriff des Anspruch 1.

### Beschreibung der Erfindung

Aufgabe der vorliegenden Erfindung ist es, eine Lösung zu schaffen, welche ein Bereitstellen einer Tischfläche für eine Person in einem Fahrzeug bei besonders geringem Stören eines Sitzbereichs, in welchem die Person in dem Fahrzeug sitzt, ermöglicht.

Diese Aufgabe wird durch den Gegenstand des unabhängigen Patentanspruchs gelöst. Weitere mögliche Ausgestaltungen der Erfindung sind in den Unteransprüchen, der Beschreibung und den Figuren offenbart.

Die Erfindung betrifft eine Tischeinrichtung für ein Fahrzeug, insbesondere ein Kraftfahrzeug, insbesondere einen Kraftwagen, insbesondere einen Personenkraftwagen. Die Tischeinrichtung umfasst einen zwischen wenigstens einer Gebrauchsstellung und einer Verstaustellung verstellbaren Tisch, welcher ein in der Gebrauchsstellung eine Tischfläche bereitstellendes Tischplattenelement und ein Stützelement umfasst. Dieses Tischplattenelement ist somit dazu eingerichtet, in der wenigstens einen Gebrauchsstellung die Tischfläche für einen Gebrauch durch die Person bereitzustellen. An dem Stützelement ist das Tischplattenelement gehalten. Die Tischeinrichtung umfasst weiterhin eine Halteeinrichtung, an welcher das Stützelement gehalten ist. Über das Stützelement ist somit das Tischplattenelement an der Halteeinrichtung gehalten. Für ein Verstellen der Tischeinrichtung ist das Stützelement dazu eingerichtet, relativ zu dem Halteelement um eine Drehachse gedreht zu werden. Weiterhin ist für das Verstellen der Tischeinrichtung das Tischplattenelement dazu eingerichtet, relativ zu dem Stützelement um eine schräg zur Drehachse verlaufende Schwenkachse verschwenkt zu werden. Das bedeutet, dass das Stützelement ein Ausrichten des Tischplattenelements zu der Halteeinrichtung beim Verstellen der Tischeinrichtung zwischen der Verstaustellung und der wenigstens einen Gebrauchsstellung ermöglicht. Beim Verschwenken der Tischeinrichtung werden somit das Tischplattenelement und das Stützelement relativ zu der Halteeinrichtung um die Drehachse und das Tischplattenelement relativ zu der Halteeinrichtung zusätzlich um die Schwenkachse verschwenkt, wobei die Drehachse und die Schwenkachse schräg zueinander verlaufen. Hierdurch kann eine besonders komplexe Bewegung des Tischplattenelements relativ zu der Halteeinrichtung beim Verstellen der Tischeinrichtung aus der Verstaustellung in die wenigstens eine Gebrauchsstellung umgesetzt werden, wodurch eine Beeinträchtigung einer auf einem Sitz des Fahrzeug sitzenden Person durch das Tischplattenelement beim Verstellen der Tischeinrichtung besonders gering gehalten werden kann. Bei einem Ausfahren des Tischplattenelements aus der Verstaustellung in die wenigstens eine Gebrauchsstellung kann somit das Tischplattenelement besonders weit um die auf dem Sitz sitzende Person herum bewegt werden, insbesondere ohne dass die Person einer Bewegung des Tischplattenelements auszuweichen hat. Somit ermöglicht die Tischeinrichtung eine besonders ergonomische Verstellung des Tischplattenelements bei der Verstellung der Tischeinrichtung aus der Verstaustellung in die wenigstens eine Gebrauchsstellung.

Erfindungsgemäß umfasst die Tischeinrichtung eine Führungskulisse, in welcher ein Schlitten geführt ist. Diese Führungskulisse kann insbesondere als Schlitz ausgeführt sein, in welchem ein Stift des Schlittens eingesteckt ist, wodurch der Schlitten in der Führungskulisse geführt ist. Die Führungskulisse ist dazu eingerichtet, eine Verschwenkbewegung des Tischplattenelements relativ zu dem Stützelement bei Entlangbewegen des Schlittens in der Führungskulisse vorzugeben. Eine Kontur der Führungskulisse definiert somit die von dem Tischplattenelement relativ zu dem Stützelement und insbesondere relativ zu der Halteeinrichtung zurückzulegenden Verschwenkbewegung bei einem Verstellen der Tischeinrichtung zwischen der Verstaustellung und der wenigstens einen Gebrauchsstellung. Insbesondere kann der in der Führungskulisse geführte Schlitten eine Klappbewegung des Tischplattenelements relativ zu dem Stützelement um die Schwenkachse vorgeben. Die Führungskulisse ermöglicht somit, dass die Verschwenkbewegung des Tischplattenelements relativ zu dem Stützelement und insbesondere zusätzlich relativ zu der Halteeinrichtung besonders präzise vorgegeben und festgelegt ist.

In weiterer Ausgestaltung der Erfindung ist es vorgesehen, dass der in der Führungskulisse geführte Schlitten über ein relativ zu dem Schlitten und relativ zu dem Tischplattenelement verschwenkbares Verbindungselement an dem Tischplattenelement gehalten ist. Über eine Kontur der Führungskulisse kann somit über das an dem Schlitten gehaltene Verbindungselement das Tischplattenelement in seinem Winkel um die Schwenkachse relativ zu dem Stützelement eingestellt werden. Insbesondere ermöglicht das Verbindungselement ein Klappen des Tischplattenelements relativ zu dem Stützelement um die Schwenkachse, wobei ein jeweiliger Klappwinkel von einer Position des Schlittens in der Führungskulisse sowie einer Geometrie der Führungskulisse abhängt. Die Führungskulisse kann insbesondere in dem Stützelement vorgesehen sein. Das relativ zu dem Schlitten sowie relativ zu dem Tischplattenelement schwenkbare Verbindungselement ermöglicht, dass das Tischplattenelement relativ zu dem Stützelement um die Schwenkachse verschwenkt werden kann, welche insbesondere parallel zu einer Ebene, in welcher sich die Führungskulisse erstreckt, verläuft.

Erfindungsgemäß weist die Führungskulisse wenigstens zwei Teilbereiche auf, welche jeweils eine Teilverschwenkbewegung der Tischeinrichtung definieren. Für ein Verstellen der Tischeinrichtung aus der Verstaustellung in die wenigstens eine Gebrauchsstellung sind insbesondere sämtliche Teilverschwenkbewegungen von der Tischeinrichtung zu durchlaufen. Der erste Teilbereich der Führungskulisse gibt eine erste Verschwenkbewegung des Tischs relativ zu der Halteeinrichtung um die Drehachse vor. Bei dieser durch den ersten Teilbereich vorgegebenen ersten Verschwenkbewegung kann das Tischplattenelement relativ zu dem Stützelement in seiner Ausrichtung unverändert gehalten sein. Der zweite Teilbereich der Führungskulisse gibt eine zweite Verschwenkbewegung des Tischplattenelements um die Schwenkachse relativ zu dem Stützelement vor. Während der zweiten Verschwenkbewegung des Tischplattenelements um die Schwenkachse relativ zu dem Stützelement kann durch den zweiten Teilbereich gleichzeitig ein Verschwenken des Stützelements um die Drehachse vorgegeben sein. Mit anderen Worten ist es somit durch die Führungskulisse vorgegeben, dass bei einem Verstellen der Tischeinrichtung aus der Verstaustellung in die wenigstens eine Gebrauchsstellung der Tisch um die Drehachse verschwenkt wird, wobei, während der Schlitten im ersten Teilbereich der Führungskulisse angeordnet ist, das Tischplattenelement in seiner Ausrichtung relativ zu dem Stützelement um die Schwenkachse fixiert ist, und bei einer Anordnung des Schlittens in dem zweiten Teilbereich der Führungskulisse das Tischplattenelement relativ zu dem Stützelement um die Schwenkachse verschwenkt ist im Vergleich zu einer Anordnung des Tischplattenelements relativ zu dem Stützelement bei der Verstaustellung der Tischeinrichtung. Folglich ermöglicht die Führungskulisse, dass bei dem Verstellen der Tischeinrichtung aus der Verstaustellung in die wenigstens eine Gebrauchsstellung erst der Tisch durch Rotieren um die Drehachse relativ zu der Halteeinrichtung aus der Verstauposition heraus verschwenkt wird und anschließend das Tischplattenelement relativ zu dem Stützelement um die Schwenkachse geklappt wird, um ein Bereitstellen der Tischplatte durch das Tischplattenelement für die Person zu ermöglichen. Hierdurch kann das Tischplattenelement besonders weit um die Person herum bewegt werden bei einem Verstellen der Tischeinrichtung aus der Verstaustellung in die wenigstens eine Gebrauchsstellung, sodass die Person besonders wenig durch das Tischplattenelement bei dem Verstellen der Tischeinrichtung gestört wird.

In diesem Zusammenhang kann es insbesondere vorgesehen sein, dass in dem ersten Teilbereich ein Abstand der Führungskulisse zu der Drehachse konstant ist und in dem zweiten Teilbereich die Führungskulisse entlang einer Verstellrichtung des Schlittens in der Führungskulisse von dem ersten Teilbereich zu dem zweiten Teilbereich sich an die Drehachse annähert. Bewegt sich somit der Schlitten in der Führungskulisse aus Richtung des ersten Teilbereichs in Richtung des zweiten Teilbereichs, insbesondere von einem der Verstaustellung zugeordneten Ende der Führungskulisse, in Richtung eines der wenigstens einen Gebrauchsstellung zugeordneten Endes der Führungskulisse, dann wird der Schlitten bei dessen Bewegung innerhalb des zweiten Teilbereichs der Führungskulisse immer näher an die Drehachse heran bewegt, wodurch sich ein Abstand zwischen dem Schlitten und der Drehachse bei einem Bewegen des Schlittens in der Führungskulisse in dem zweiten Teilbereich verringert. Durch das Annähern des Schlittens an die Drehachse kann das Verbindungselement mit seinem an dem Schlitten gehaltenen Ende zu der Drehachse heran gezogen werden bei der Bewegung des Schlittens in dem zweiten Teilbereich der Führungskulisse. Durch das Heranziehen des Verbindungselements zu der Drehachse hin bei einem Bewegen des Schlittens in dem zweiten Teilbereich der Führungskulisse in Richtung des der wenigstens einen Gebrauchsstellung zugeordneten Endes der Führungskulisse verschwenkt das Verbindungselement mit seinem an dem Tischplattenelement gehaltenen Ende des Tischplattenelements um die Schwenkachse relativ zu dem Stützelement. Über die Führungskulisse kann somit die erste Verschwenkbewegung der Bewegung des Tischs um die Drehachse besonders gut und präzise mit der zweiten Verschwenkbewegung des Tischplattenelements relativ zu dem Stützelement um die Schwenkachse gekoppelt werden. Über die Führungskulisse kann somit ein gesamtes Verstellen der Tischeinrichtung zwischen der wenigstens einen Verstaustellung und der wenigstens einen Gebrauchsstellung präzise vorgegeben werden.

Es ist in weiterer Ausgestaltung der Erfindung vorgesehen, dass das Tischplattenelement eine Rotationseinrichtung umfasst, über welche eine die Tischfläche bereitstellende Tischplatte des Tischplattenelements relativ zu dem Stützelement um eine Rotationsachse verschwenkt werden kann, welche schräg zu der Schwenkachse ausgerichtet ist. Hierbei kann die Tischplatte insbesondere bei einer Anordnung der Tischeinrichtung in der wenigstens einen Gebrauchsstellung um die Rotationsachse verschwenkbar sein. Bei einer Anordnung der Tischeinrichtung in der Verstaustellung beziehungsweise während eines Verstellvorgangs der Tischeinrichtung zwischen der Verstaustellung und der wenigstens einen Gebrauchsstellung kann eine Rotation der Tischplatte um die Rotationsachse unterbunden sein. Durch das Verschwenken der Tischplatte relativ zu dem Stützelement um die Rotationsachse kann die Tischplatte zu der auf dem Sitz sitzenden Person hin oder von der Person weg verschwenkt werden. Diese Rotationsachse kann derart ausgerichtet sein, dass diese für eine Anordnung der Tischeinrichtung in der wenigstens einen Gebrauchsstellung schräg zur Drehachse verläuft und bei einer Anordnung der Tischeinrichtung in der Verstaustellung parallel zur Drehachse ausgerichtet ist. Die Rotationsachse ist durch die Rotationseinrichtung vorgegeben, über welche die Tischplatte an dem Stützelement gehalten werden kann. Die Rotationseinrichtung ist dazu eingerichtet, die Verschwenkung der Tischplatte zu dem Stützelement um die Rotationsachse zu ermöglichen. Die Rotationseinrichtung ermöglicht somit, dass eine Person die Tischplatte an seine individuellen Bedürfnisse angepasst zu sich her oder von sich weg verschwenken kann.

Es ist in weiterer Ausgestaltung der Erfindung vorgesehen, dass die Führungskulisse an einem der wenigstens einen Gebrauchsstellung zugeordneten Ende eine Abzweigung aufweist, über welche unterschiedliche Gebrauchsstellungen vorgegeben sind. Die Abzweigung ermöglicht, dass der Schlitten an dem der wenigstens einen Gebrauchsstellung zugeordneten Ende der Führungskulisse unterschiedliche Endpositionen einnehmen kann, wobei jede der möglichen Endpositionen eine definierte Gebrauchsstellung vorgibt. Je nachdem, welche Endposition des Schlittens an der Abzweigung gewählt wird, kann die von der Tischeinrichtung einzunehmende Gebrauchsstellung aus den mehreren Gebrauchsstellungen ausgewählt werden. An der Abzweigung teilt sich die Führungskulisse an ihrem der wenigstens einen Gebrauchsstellung zugeordneten Ende in wenigstens zwei zueinander unterschiedliche, jeweils einer Gebrauchsstellung zugeordnete Endabschnitte auf, wobei der Schlitten entweder in einem ersten der Endabschnitte oder in dem zweiten der Endabschnitte der Führungskulisse für das Einstellen der Gebrauchsstellung der Tischeinrichtung angeordnet werden kann. Das Vorsehen der Abzweigung der Führungskulisse ermöglicht, dass wenigstens zwei, insbesondere mehrere, Gebrauchsstellungen für die Tischeinrichtung besonders präzise vorgegeben werden können.

Es ist in weiterer Ausgestaltung der Erfindung vorgesehen, dass die Tischeinrichtung eine Federeinrichtung umfasst, welche dazu eingerichtet ist, den Schlitten mit einer Federkraft zu beaufschlagen. Durch das Beaufschlagen des Schlittens mit der Federkraft wird bei einem Bewegen des Schlittens zu dem der Gebrauchsstellung zugeordneten Ende der Führungskulisse ohne Überwinden der Federkraft eine erste Gebrauchsstellung eingestellt und bei Überwinden der Federkraft eine zu der ersten Gebrauchsstellung unterschiedliche, zweite Gebrauchsstellung eingestellt. Das bedeutet, dass die Federeinrichtung dazu eingerichtet ist, den Schlitten bei einem Verstellen der Federeinrichtung von der Verstaustellung in die wenigstens eine Gebrauchsstellung mittels Federkraft an der Abzweigung in einen vorgegebenen ersten Endabschnitt der Führungskulisse zu führen. Durch Überwinden der Federkraft kann der Schlitten an der Abzweigung in einen zu dem ersten Endabschnitt unterschiedlichen zweiten vorgegebenen Endabschnitt geführt werden, wodurch die Tischeinrichtung in einer dem zweiten Endabschnitt der Führungskulisse zugeordneten, zweiten Gebrauchsstellung angeordnet wird. Durch die Federeinrichtung kann somit eine Standard-Gebrauchsstellung für die Tischeinrichtung vorgegeben werden. Für ein Anordnen der Tischeinrichtung in einer zu der Standard-Gebrauchsstellung unterschiedlichen weiteren Gebrauchsstellung ist somit die Federkraft der Federeinrichtung zu überwinden. Hierbei kann die Federkraft der Federeinrichtung beispielsweise von der Person überwunden werden.

In weiterer Ausgestaltung der Erfindung ist eine Antriebseinrichtung vorgesehen, welche dazu eingerichtet ist, bei Ermitteln einer Betätigung eines Betätigungselements die Tischeinrichtung zwischen der Verstaustellung und der wenigstens einen Gebrauchsstellung zu verstellen. Die Antriebseinrichtung kann insbesondere dazu eingerichtet sein, über eine Gasdruckfeder und/oder über einen Elektromotor die Tischeinrichtung zwischen der Verstaustellung und der wenigstens einen Gebrauchsstellung zu verstellen. Die Antriebseinrichtung ermöglicht somit für die Person ein besonders einfaches und komfortables Verstellen der Tischeinrichtung zwischen der Verstaustellung und der wenigstens einen Gebrauchsstellung, wobei die Person durch Betätigen des Betätigungselements das Verstellen der Tischeinrichtung auslösen kann.

In weiterer Ausgestaltung der Erfindung ist es vorgesehen, dass die Halteeinrichtung eine Mittelkonsole für ein Kraftfahrzeug ist. Hierbei ist die Tischeinrichtung insbesondere dazu eingerichtet, in einem Kraftfahrzeug, insbesondere einem Kraftwagen, eingesetzt zu werden. Aufgrund der Ausgestaltung der Halteeinrichtung als die Mittelkonsole ist somit der Tisch an der Mittelkonsole für das Kraftfahrzeug gehalten. Bei der Anordnung der Tischeinrichtung in der Verstaustellung kann der Tisch in der Mittelkonsole aufgenommen sein oder in seitlicher Anlage an der Mittelkonsole angeordnet sein. Hierdurch ist der Tisch in der Verstaustellung der Tischeinrichtung besonders gut in einem Innenraum des Kraftfahrzeugs, insbesondere des Kraftwagens, bauraumsparend verstaubar, wodurch Fahrzeuginsassen des Kraftfahrzeugs, insbesondere des Kraftwagens, bei einer Anordnung der Tischeinrichtung in der Verstaustellung besonders wenig durch den Tisch gestört beziehungsweise in ihrer Bewegungsfreiheit beeinträchtigt werden.

Weitere Vorteile, Merkmale und Einzelheiten der Erfindung können sich aus der nachfolgenden Beschreibung möglicher Ausführungsbeispiele sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, solange sie im Rahmen der Ansprüche bleiben.

### Kurze Figurenbeschreibung

Die Zeichnung zeigt in:

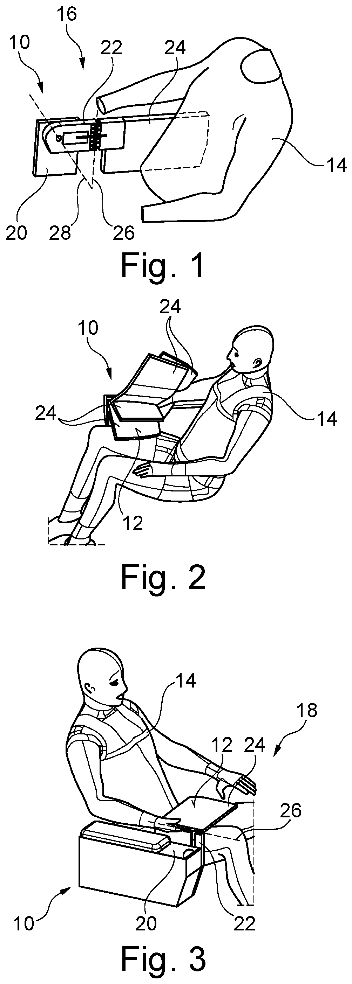

- Fig. 1: eine schematische Perspektivansicht einer Tischeinrichtung in einem Fahrzeug, welche neben einer in dem Fahrzeug angeordneten Person angeordnet ist, wobei die Tischeinrichtung in einer Verstaustellung angeordnet ist, in welcher ein Bereitstellen einer Tischfläche für die Person unterbleibt;
- Fig. 2: eine schematische Perspektivansicht der Tischeinrichtung in unterschiedlichen Positionen während eines Verstellvorgangs, bei welchem die Tischeinrichtung aus der Verstaustellung in wenigstens eine Gebrauchsstellung verstellt wird, in welcher die Tischeinrichtung eine Tischfläche für die Person zur Verfügung stellt;
- Fig. 3: eine schematische Perspektivansicht der Tischeinrichtung, welche in der wenigstens einen Gebrauchsstellung angeordnet ist, wodurch ein Tischplattenelement der Tischeinrichtung die Tischfläche für die Person zur Verfügung stellt, wobei das Tischplattenelement Beine der Person zumindest bereichsweise in Hochrichtung überdeckt;

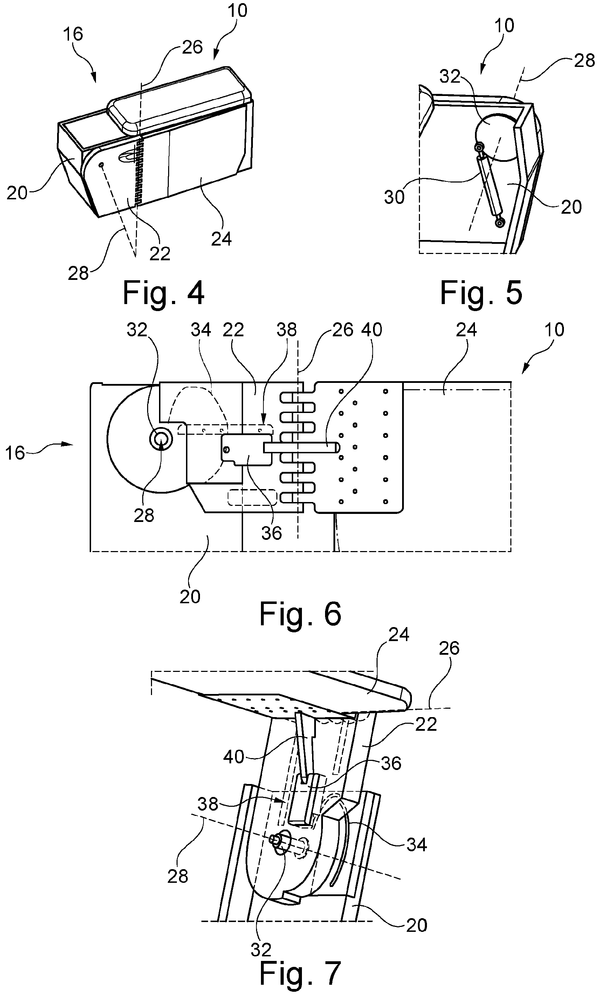

- Fig. 4: eine schematische Perspektivansicht der Tischeinrichtung in der Verstaustellung, wobei eine Halteeinrichtung der Tischeinrichtung als Mittelkonsole des Fahrzeugs ausgebildet ist, an der Halteeinrichtung ein Stützelement um eine Drehachse drehbar gehalten ist und an dem Stützelement wiederum das relativ zu dem Stützelement um eine Schwenkachse verschwenkbare Tischplattenelement gehalten ist;
- Fig. 5: eine schematische Perspektivansicht einer Antriebseinrichtung, welche dazu eingerichtet ist, ein Verstellen der Tischeinrichtung aus der Verstaustellung in die wenigstens eine Gebrauchsstellung anzutreiben;
- Fig. 6: eine schematische Seitenansicht der Tischeinrichtung, wobei die Tischeinrichtung einen in einer Führungskulisse der Halteeinrichtung geführten Schlitten umfasst, an welchem ein Verbindungselement gehalten ist, über welches das Tischplattenelement mit dem Schlitten derart gekoppelt ist, dass über den Schlitten eine Verschwenkbewegung des Tischplattenelements um die Schwenkachse vorgegeben wird;
- Fig. 7: eine schematische Perspektivansicht der Tischeinrichtung in wenigstens einer der Gebrauchsstellungen, wobei über den Schlitten das Verbindungselement zu einer Drehachse hin gezogen ist, um welche das Stützelement relativ zu der Halteeinrichtung gedreht werden kann, wodurch das Tischplattenelement relativ zu dem Stützelement im Vergleich zu der Verstaustellung um die Schwenkachse geklappt ist;

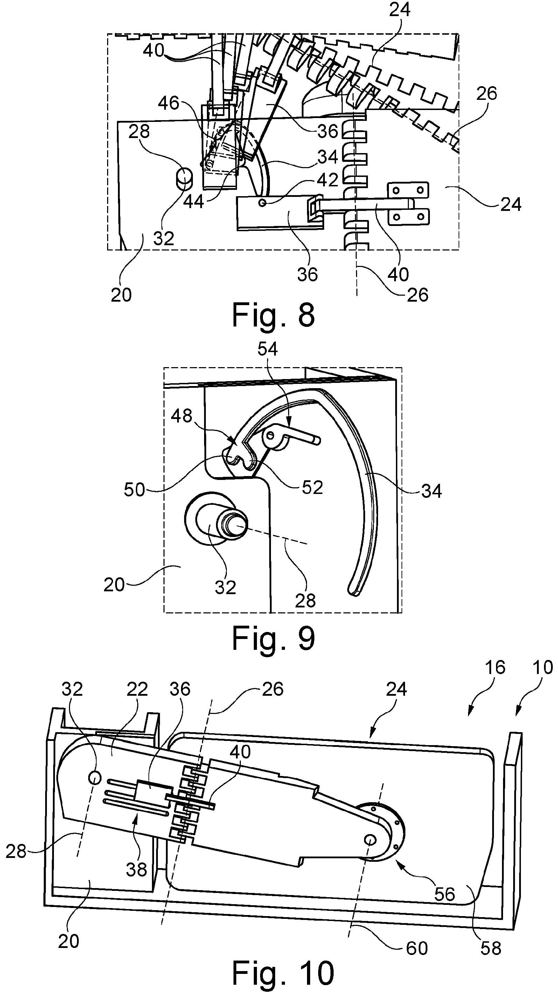

- Fig. 8: eine schematische Seitenansicht eines Ausschnitts der Tischeinrichtung mit unterschiedlichen Positionen des Schlittens in der Führungskulisse während der Verstellung der Tischeinrichtung zwischen der Verstaustellung und der wenigstens einen Gebrauchsstellung;
- Fig. 9: eine schematische Seitenansicht der Halteeinrichtung mit der Führungskulisse, wobei die Führungskulisse eine Abzweigung aufweist, an welcher sich die Führungskulisse in zwei zueinander unterschiedliche Endabschnitte aufteilt, wobei durch jeden der Endabschnitte eine jeweilige Gebrauchsstellung vorgegeben ist; und
- Fig. 10: eine schematische Perspektivansicht der Tischeinrichtung, wobei das Tischplattenelement eine Rotationseinrichtung umfasst, über welche eine die Tischfläche bereitstellende Tischplatte des Tischplattenelements relativ zu dem Stützelement um eine Rotationsachse gedreht werden kann, wodurch die Person die Tischplatte zu sich hin oder von sich weg verdrehen kann.

Funktionsgleichen Elementen sind in den Figuren gleiche Bezugszeichen zugewiesen.

In den Fig. 1 bis 3 ist in jeweiligen Perspektivansichten eine Tischeinrichtung 10 gezeigt, welche dazu eingerichtet ist, in einem Fahrzeug, insbesondere einem Kraftfahrzeug, eingesetzt zu werden. Alternativ zu dem Einsatz im Kraftfahrzeug kann die Tischeinrichtung 10 beispielsweise in einem Zug oder in einem Flugzeug eingesetzt werden. Die Tischeinrichtung 10 ist dazu eingerichtet, eine Tischfläche 12 für eine Person 14, insbesondere einen Fahrzeuginsassen des Fahrzeugs, bereitzustellen. Um Bauraum des Fahrzeugs besonders effizient nutzen zu können, ist es vorgesehen, dass die Tischeinrichtung 10 zwischen einer in Fig. 1 gezeigten Verstaustellung 16 und wenigstens einer in Fig. 3 gezeigten Gebrauchsstellung 18 verstellt werden kann. In Fig. 2 ist die Tischeinrichtung 10 in unterschiedlichen Zwischenpositionen während der Verstellung zwischen der Verstaustellung 16 und der wenigstens einen Gebrauchsstellung 18 gezeigt.

Die Tischeinrichtung 10 umfasst eine Halteeinrichtung 20, ein Stützelement 22 sowie ein Tischplattenelement 24. Das Tischplattenelement 24 ist dazu eingerichtet, die Tischfläche 12 für die Person 14 bereitzustellen. Das Tischplattenelement 24 ist um eine Schwenkachse 26 relativ zu dem Stützelement 22 verschwenkbar an dem Stützelement 22 gehalten. Das Stützelement 22 ist wiederum um eine Drehachse 28 drehbar an der Halteeinrichtung 20 gehalten. Vorliegend wird beim Verstellen der Tischeinrichtung 10 aus der Verstaustellung 16 in die wenigstens eine Gebrauchsstellung 18 ein das Tischplattenelement 24 und das Stützelement 22 umfassender Tisch um die Drehachse 28 aus der Verstaustellung 16 heraus verschwenkt und anschließend das Tischplattenelement 24 um die Schwenkachse 26 relativ zu dem Stützelement 22 verschwenkt, wodurch das Tischplattenelement 24 zu einem Schoß der Person 14 hin geklappt werden kann, wodurch wiederum das Tischplattenelement 24 die Tischfläche 12 bereitstellen kann.

Vorliegend ist die Halteeinrichtung 20 Teil einer Mittelkonsole des Fahrzeugs. Hierdurch kann der Tisch in dessen Verstaustellung 16 an der Mittelkonsole anliegend angeordnet werden oder in der Mittelkonsole aufgenommen werden, was ein besonders platzsparendes Verstauen des Tischs in der Verstaustellung 16 ermöglicht. In Fig. 4 ist der Tisch in seiner Verstaustellung 16 seitlich an der Mittelkonsole anliegend angeordnet. Das bedeutet, dass in der Verstaustellung 16 sowohl das Tischplattenelement 24 als auch das Stützelement 22 seitlich an der Mittelkonsole anliegen.

In Fig. 5 ist die Halteeinrichtung 20 in einer Rückansicht gezeigt. Hierbei kann eine Antriebseinrichtung 30 der Tischeinrichtung 10 erkannt werden, mittels welcher das Verstellen der Tischeinrichtung 10 zwischen der Verstaustellung 16 und der wenigstens einen Gebrauchsstellung 18 angetrieben werden kann. Vorliegend umfasst die Antriebseinrichtung 30 eine Gasdruckfeder, mittels welcher ein Drehelement 32 um die Drehachse 28 rotiert werden kann. Das Drehelement 32 ist drehfest mit dem Stützelement 22 verbunden. Das bedeutet, dass bei einem Rotieren des Drehelements 32 mittels der Antriebseinrichtung 30 um die Drehachse 28 das Stützelement 22 mit dem Drehelement 32 mit um die Drehachse 28 gedreht wird. Vorliegend sind die Antriebseinrichtung 30 und das Stützelement 22 an einander gegenüberliegenden Seiten der Halteeinrichtung 20 angeordnet, wobei sich das Drehelement 32 durch die Halteeinrichtung 20 hindurch erstreckt.

In Fig. 6 ist eine Seitenansicht der Tischeinrichtung 10 in der Verstaustellung 16 gezeigt, wobei für eine besonders gute Übersichtlichkeit das Stützelement 22 lediglich ausschnittsweise dargestellt ist. Wie in Fig. 6 und noch besser in Fig. 7 erkannt werden kann, weist die Halteeinrichtung 20 eine Führungskulisse 34 auf. Vorliegend ist die Führungskulisse 34 in Form einer Nut bereitgestellt. In dieser Führungskulisse 34 ist ein Schlitten 36 geführt. Das bedeutet, dass der Schlitten 36 in der Führungskulisse 34 bewegt werden kann. Vorliegend weist das Stützelement 22 eine Ausnehmung 38 auf, in welcher der Schlitten 36 angeordnet ist und welche eine translatorische Bewegung des Schlittens 36 relativ zu dem Stützelement 22 ermöglicht. Vorliegend ermöglicht die Ausnehmung 38 eine translatorische Bewegung des Schlittens 36 zu der Drehachse 28 hin und von der Drehachse 28 weg. An dem Schlitten 36 ist ein Verbindungselement 40 gelenkig gehalten. Dieses Verbindungselement 40 ist somit einenends an dem Schlitten 36 gehalten. Anderenends ist das Verbindungselement 40 gelenkig an dem Tischplattenelement 24 gehalten. Somit ist das Tischplattenelement 24 über das relativ zu dem Tischplattenelement 24 verschwenkbare Verbindungselement 40 an dem Schlitten 36 gehalten. Mittels des Schlittens 36 kann über das Verbindungselement 40 das Tischplattenelement 24 relativ zu dem Stützelement 22 um die Schwenkachse 26 geklappt werden. Durch Heranbewegen des Schlittens 36 an die Drehachse 28 beziehungsweise Wegbewegen des Schlittens 36 von der Drehachse 28 wird das Tischplattenelement 24 um die Schwenkachse 26 relativ zu dem Stützelement 22 geschwenkt.

In Fig. 8 ist eine Verschwenkbewegung des Tischplattenelements 24 über die Bewegung des Schlittens 36 relativ zu der Drehachse 28 dargestellt, wobei aus Übersichtlichkeitsgründen das Stützelement 22 nicht gezeigt ist. Wie in Fig. 8 weiterhin erkannt werden kann, ist der Schlitten 36 über einen in die Führungskulisse 34 eingreifenden Stift 42 in der Führungskulisse 34 zu führen. Dieser Stift 42 kann somit innerhalb der Führungskulisse 34 bewegt werden, wodurch der Schlitten 36 in der Führungskulisse 34 geführt wird. Wie in Fig. 8 besonders gut erkannt werden kann, wird die Schwenkachse 26 bei einem Verschwenken des Tischs und somit sowohl des Stützelements 22 als auch des Tischplattenelements 24 um die Drehachse 28 ebenfalls um die Drehachse 28 verschwenkt. Die Schwenkachse 26 gibt eine mögliche Verschwenkung des Tischplattenelements 24 relativ zu dem Stützelement 22 vor und wird bei einer Verschwenkbewegung des Tischs um die Drehachse 28 folglich mit um die Drehachse 28 bewegt.

Eine präzise Verstellbewegung des Tischplattenelements 24 relativ zu der Halteeinrichtung 20 wird von einer Geometrie der Führungskulisse 34 vorgegeben. Wie in Fig. 8 erkannt werden kann, ist die Führungskulisse 34 gekrümmt ausgebildet, wobei sich jeweilige Krümmungen der Führungskulisse 34 an unterschiedlichen Punkten entlang der Führungskulisse 34 voneinander unterscheiden können. Vorliegend weist die Führungskulisse 34 einen ersten Teilbereich 44 und einen zweiten Teilbereich 46 auf. In dem ersten Teilbereich 44 ist an jedem Punkt der Führungskulisse 34 ein Abstand der Führungskulisse 34 zu der Drehachse 28 zumindest im Wesentlichen gleich. Das bedeutet, dass bei einem Bewegen des Schlittens 36 in dem ersten Teilbereich 44 entlang der Führungskulisse 34 ein Abstand des Schlittens 36 zu der Drehachse 28 zumindest im Wesentlichen konstant ist. Solange der Schlitten 36 in dem ersten Teilbereich 44 der Führungskulisse 34 bewegt wird, unterbleibt ein Verschwenken des Tischplattenelements 24 relativ zu dem Stützelement 22 um die Schwenkachse 26. Vorliegend gibt der erste Teilbereich 44 der Führungskulisse 34 eine erste Verschwenkbewegung des Tischs relativ zu der Halteeinrichtung 20 um die Drehachse 28 vor, bei welcher das Tischplattenelement 24 relativ zu dem Stützelement 22 in seiner Ausrichtung unverändert ist.

In dem zweiten Teilbereich 46 der Führungskulisse 34 ist ein Abstand unterschiedlicher Punkte der Führungskulisse 34 zu der Drehachse 28 unterschiedlich. Insbesondere erfolgt eine Annäherung der Führungskulisse 34 an die Drehachse 28 in dem zweiten Teilbereich 46. Mit anderen Worten nähert sich die Führungskulisse 34 entlang einer Verstellrichtung des Schlittens 36 in der Führungskulisse 34 von dem ersten Teilbereich 44 zu dem zweiten Teilbereich 46 an die Drehachse 28 an. Wird der Schlitten 36 somit in der Führungskulisse 34 zuerst in dem ersten Teilbereich 44 geführt, dann bleibt ein Abstand des Schlittens 36 zu der Drehachse 28 konstant. Wird der Schlitten 36 von dem ersten Teilbereich 44 in den zweiten Teilbereich 46 der Führungskulisse 34 bewegt und insbesondere in Richtung eines freien Endes der Führungskulisse 34 des zweiten Teilbereichs 46 bewegt, dann nähert sich der Schlitten 36 an die Drehachse 28 an. Infolge der Annäherung des Schlittens 36 an die Drehachse 28 wird über das Verbindungselement 40 ein Ankerpunkt des Tischplattenelements 24, an welchem das Verbindungselement 40 gelenkig an dem Tischplattenelement 24 gehalten ist, zu der Drehachse 28 hin gezogen, wodurch das Tischplattenelement 24 um die Schwenkachse 26 relativ zu dem Stützelement 22 verschwenkt wird. Der zweite Teilbereich 46 der Führungskulisse 34 gibt somit eine zweite Verschwenkbewegung des Tischplattenelements 24 relativ zu dem Stützelement 22 beziehungsweise relativ zu der Halteeinrichtung 20 vor.

Durch ein Drehen des Drehelements 32 um die Drehachse 28 mittels der Antriebseinrichtung 30 wird somit zum einen das Stützelement 22 und über das Stützelement 22 der Tisch um die Drehachse 28 relativ zu der Halteeinrichtung 20 gedreht und zum anderen über die Kulissenführung des Schlittens 36 in der Führungskulisse 34 das Tischplattenelement 24 um die Schwenkachse 26 relativ zu dem Stützelement 22 geklappt. Die Antriebseinrichtung 30 ist somit dazu eingerichtet, sowohl die erste Verschwenkbewegung des Tischs um die Drehachse 28 als auch die Klappbewegung des Tischplattenelements 24 um die Schwenkachse 26 und damit die zweite Verschwenkbewegung auszulösen. Hierbei kann eine jeweilige Verstellbewegung der Tischeinrichtung 10 bei deren Verstellung zwischen der Verstaustellung 16 und der wenigstens einen Gebrauchsstellung 18 über die Führungskulisse 34 besonders präzise vorgegeben werden.

In Fig. 9 ist die Halteeinrichtung 20 mit der Führungskulisse 34 gezeigt, wobei die Führungskulisse 34 für ein Vorgeben von zwei zueinander unterschiedlichen Gebrauchsstellungen 18 eine Abzweigung 48 aufweist. An der Abzweigung 48 teilt sich die Führungskulisse 34 in einen ersten Endabschnitt 50 und in einen zweiten Endabschnitt 52 auf. Sowohl der erste Endabschnitt 50 als auch der zweite Endabschnitt 52 definieren jeweils eine vorgegebene Gebrauchsstellung 18, bei einer Anordnung des Schlittens 36 in dem jeweiligen Endabschnitt 50, 52.

Die Halteeinrichtung 20 weist vorliegend eine Aufnahme 54 auf, in welcher eine Federeinrichtung angeordnet werden kann. Diese Federeinrichtung kann insbesondere eine Schenkelfeder umfassen, welche dazu eingerichtet ist, den Schlitten 36 mit einer Federkraft zu beaufschlagen. Durch Beaufschlagen des Schlittens 36 mit der Federkraft kann die Federeinrichtung den Schlitten 36 in einem vorgegebenen definierten Endabschnitt 50, 52 führen. Um den Schlitten 36 in den jeweils anderen Endabschnitt 52, 50 der Führungskulisse 34 führen zu können, ist die Federkraft der Federeinrichtung zu überwinden. Mittels der Federeinrichtung kann somit eine Standard-Gebrauchsstellung für die Tischeinrichtung 10 vorgegeben sein. Die Federeinrichtung ist vorliegend dazu eingerichtet, den Schlitten 36 mittels der Federkraft in den ersten Endabschnitt 50 der Führungskulisse 34 zu drücken. Bei Bewegen des Schlittens 36 in der Führungskulisse 34 in Richtung eines der Gebrauchsstellungen 18 zugeordneten Endes der Führungskulisse 34 wird bei Unterbleiben des Überwindens der Federkraft eine dem ersten Endabschnitt 50 zugeordnete erste Gebrauchsstellung der Tischeinrichtung 10 eingestellt. Wird beim Bewegen des Schlittens 36 in der Führungskulisse 34 die Federkraft der Federeinrichtung überwunden, dann kann der Schlitten 36 in dem zweiten Endabschnitt 52 angeordnet werden, wodurch die Tischeinrichtung 10 in einer dem zweiten Endabschnitt 52 zugeordneten, zu der ersten Gebrauchsstellung 18 unterschiedlichen zweiten Gebrauchsstellung 18 angeordnet ist. Bei Bewegen des Schlittens 36 in der Führungskulisse 34 zu dem der Gebrauchsstellung 18 zugeordneten Ende der Führungskulisse 34 wird somit bei Überwinden der Federkraft die zu der ersten Gebrauchsstellung 18 unterschiedliche, zweite Gebrauchsstellung 18 der Tischeinrichtung 10 eingestellt. Für ein Vorgeben weiterer Gebrauchsstellungen 18 können weitere Endabschnitte an dem den Gebrauchsstellungen 18 zugeordneten Ende der Führungskulisse 34 vorgesehen sein. Die Aufnahme 54 bietet somit Platz für eine Schenkelfeder, welche bewirkt, dass das Tischplattenelement 24 sich mit der Tischfläche 12 horizontal zur Person 14 ausrichtet, wenn die Federkraft der Federeinrichtung nicht überwunden wird. Die Abzweigung 48 ermöglicht, dass das Tischplattenelement 24 leicht verstellt wird, insbesondere aus der ersten Gebrauchsstellung 18 in die zweite Gebrauchsstellung 18, wenn die Person 14 das Tischplattenelement 24 leicht anhebt.

In Fig. 10 ist die Tischeinrichtung 10 in der Verstaustellung 16 dargestellt. Hierbei umfasst das Tischplattenelement 24 eine Rotationseinrichtung 56 sowie eine Tischplatte 58. Über die Rotationseinrichtung 56 ist die Tischplatte 58 an dem Stützelement 22 um die Schwenkachse 26 schwenkbar gehalten. Vorliegend ist das Verbindungselement 40 an der Rotationseinrichtung 56 gelenkig gehalten. Die Rotationseinrichtung 56 gibt eine Rotationsachse 60 vor, um welche die Tischplatte 58 relativ zu dem Stützelement 22 zu der Schwenkachse 26 rotiert werden kann. Die Rotationsachse 60 verläuft schräg, insbesondere senkrecht, zur Schwenkachse 26 und ist beabstandet zu der Schwenkachse 26 angeordnet. Eine Ausrichtung der Rotationsachse 60 relativ zu der Drehachse 28 ist abhängig von einer Schwenkposition des Tischplattenelements 24 relativ zu dem Stützelement 22 um die Schwenkachse 26. Die Tischplatte 58 ist dazu eingerichtet, die Tischfläche 12 für die Person 14 bereitzustellen. Durch Rotation der Tischplatte 58 um die Rotationsachse 60 kann somit die Person 14 die Tischplatte 58 ausrichten, insbesondere zu sich her verschwenken oder von sich weg verschwenken.

Die Tischeinrichtung 10 ermöglicht, dass der Tisch mittels der Antriebseinrichtung 30 selbstständig von einer Ruhelage in eine Gebrauchslage gebracht werden kann. Der Tisch ist in der Ruhelage seitlich der Person 14 angeordnet. Für ein Verstellen des Tischs aus der Ruhelage in die Gebrauchslage schwenkt der Tisch in einer ersten Bewegung nach oben und klappt sich gegen Ende der Verstellung vor die Person 14 herunter. Hierbei ermöglicht die Führungskulisse 34, dass Bewegungen des Tischs besonders harmonisch ineinander übergehen. Diese harmonische Bewegung wird durch den über den Stift 42 in der Führungskulisse 34 geführten Schlitten 36 ermöglicht. Die Tischeinrichtung 10 ermöglicht einen besonders hohen Komfort für die Person 14 bei einem Verstellen zwischen der Verstaustellung 16 und der wenigstens einen Gebrauchsstellung 18.

Das Vorsehen der Rotationseinrichtung 56 ermöglicht, dass die Tischplatte 58 besonders groß ausgebildet werden kann, wodurch wiederum eine besonders große Tischfläche 12 für die Person 14 bereitgestellt werden kann. Weiterhin kann das Tischplattenelement 24 besonders spät vor die Person 14 herunter geklappt werden und ist nicht so nah an der Person 14 angeordnet, bei dem Vorsehen der Rotationseinrichtung 56. Über die Rotationseinrichtung 56 kann die Tischplatte 58 um die Rotationsachse 60 mittig zu der Person 14 hin geschwenkt werden.

Insgesamt zeigt die Erfindung, wie ein selbstständig in Gebrauchsposition gehender Tisch bereitgestellt werden kann.

### BEZUGSZEICHENLISTE

- 10: Tischeinrichtung
- 12: Tischfläche
- 14: Person
- 16: Verstaustellung
- 18: Gebrauchsstellung
- 20: Halteeinrichtung
- 22: Stützelement
- 24: Tischplattenelement
- 26: Schwenkachse
- 28: Drehachse
- 30: Antriebseinrichtung
- 32: Drehelement
- 34: Führungskulisse
- 36: Schlitten
- 38: Ausnehmung
- 40: Verbindungselement
- 42: Stift
- 44: erster Teilbereich
- 46: zweiter Teilbereich
- 48: Abzweigung
- 50: erster Endabschnitt
- 52: zweiter Endabschnitt
- 54: Aufnahme
- 56: Rotationseinrichtung
- 58: Tischplatte
- 60: Rotationsachse

## Patentansprüche

1. Tischeinrichtung (10) für ein Fahrzeug, mit einem zwischen wenigstens einer Gebrauchsstellung (18) und einer Verstaustellung (16) verstellbaren Tisch, welcher ein in der Gebrauchsstellung (18) eine Tischfläche (12) bereitstellendes Tischplattenelement (24) und ein Stützelement (22) umfasst, an welchem das Tischplattenelement (24) gehalten ist, und mit einer Halteeinrichtung (20), an welcher das Stützelement (22) gehalten ist, wobei für ein Verstellen der Tischeinrichtung (10) das Stützelement (22) dazu eingerichtet ist, relativ zu dem Halteelement (20) um eine Drehachse (28) gedreht zu werden, und das Tischplattenelement (24) dazu eingerichtet ist, relativ zu dem Stützelement (22) um eine schräg zur Drehachse (28) verlaufende Schwenkachse (26) verschwenkt zu werden, wobei eine Führungskulisse (34) vorgesehen ist, in welcher ein Schlitten (36) geführt ist und welche dazu eingerichtet ist, eine Verschwenkbewegung des Tischplattenelements (24) relativ zu dem Stützelement (22) bei Entlangbewegen des Schlittens (36) in der Führungskulisse (34) vorzugeben, **dadurch gekennzeichnet, dass** die Führungskulisse (34) wenigstens zwei Teilbereiche (44, 46) aufweist, welche jeweils eine Teilverschwenkbewegung der Tischeinrichtung (10) definieren, wobei der erste Teilbereich (44) eine Verschwenkbewegung des Tischs relativ zu der Halteeinrichtung (20) um die Drehachse (28) vorgibt, bei welcher das Tischplattenelement (24) relativ zu dem Stützelement (22) in seiner Ausrichtung unverändert ist, und wobei der zweite Teilbereich (46) eine Schwenkbewegung des Tischplattenelements (24) um die Schwenkachse (26) relativ zu dem Stützelement (22) vorgibt.

2. Tischeinrichtung (10) nach Anspruch 1,
**dadurch gekennzeichnet, dass**
der in der Führungskulisse (34) geführte Schlitten (36) über ein relativ zu dem Schlitten (36) und relativ zu dem Tischplattenelement (24) verschwenkbares Verbindungselement (40) an dem Tischplattenelement (24) gehalten ist.

3. Tischeinrichtung (10) nach einem der vorhergehenden Ansprüche,
**dadurch gekennzeichnet, dass**
in dem ersten Teilbereich (44) ein Abstand der Führungskulisse (34) zu der Drehachse (28) konstant ist und in dem zweiten Teilbereich (46) die Führungskulisse (34) entlang einer Verstellrichtung des Schlittens (36) in der Führungskulisse (34) von dem ersten Teilbereich (44) zu dem zweiten Teilbereich (46) sich an die Drehachse (28) annähert.

4. Tischeinrichtung (10) nach einem der vorhergehenden Ansprüche,
**dadurch gekennzeichnet, dass**
das Tischplattenelement (24) eine Rotationseinrichtung (56) umfasst, über welche eine die Tischfläche (12) bereitstellende Tischplatte (58) des Tischplattenelements (24) relativ zu dem Stützelement (22) um eine Rotationsachse (60) verschwenkt werden kann, welche schräg zu der Schwenkachse (26) ausgerichtet ist.

5. Tischeinrichtung (10) nach einem der vorhergehenden Ansprüche,
**dadurch gekennzeichnet, dass**
die Führungskulisse (34) an einem der wenigstens einen Gebrauchsstellung (18) zugeordneten Ende eine Abzweigung (48) aufweist, über welche unterschiedliche Gebrauchsstellungen (18) vorgegeben sind.

6. Tischeinrichtung (10) nach Anspruch 5,
**dadurch gekennzeichnet, dass**
eine Federeinrichtung vorgesehen ist, welche dazu eingerichtet ist, den Schlitten (36) mit einer Federkraft zu beaufschlagen, wodurch bei Bewegen des Schlittens (36) zu dem der Gebrauchsstellung (18) zugeordneten Ende ohne Überwinden der Federkraft eine erste Gebrauchsstellung (18) eingestellt wird und bei Überwinden der Federkraft eine zu der ersten Gebrauchsstellung (18) unterschiedliche, zweite Gebrauchsstellung (18) eingestellt wird.

7. Tischeinrichtung (10) nach einem der vorhergehenden Ansprüche,
**dadurch gekennzeichnet, dass**
eine Antriebseinrichtung (30) vorgesehen ist, welche dazu eingerichtet ist, bei Ermittteln einer Betätigung eines Betätigungselements die Tischeinrichtung (10) zwischen der Verstaustellung (16) und der wenigstens einen Gebrauchsstellung (18) zu verstellen.

8. Tischeinrichtung (10) nach einem der vorhergehenden Ansprüche,
**dadurch gekennzeichnet, dass**
die Halteeinrichtung (22) eine Mittelkonsole für ein Kraftfahrzeug ist.

## Claims

1. Table device (10) for a vehicle, comprising a table adjustable between at least one use position (18) and a stowage position (16), which includes a tabletop element (24) providing a table surface (12) in the use position (18), and a support element (22) to which the tabletop element (24) is attached, and a holding device (20) to which the support element (22) is attached, wherein for adjusting the table device (10), the support element (22) is configured to rotate relative to the holding element (20) about a rotation axis (28), and the tabletop element (24) is configured to pivot relative to the support element (22) about a pivot axis (26) inclined to the rotation axis (28), wherein a guide track (34) is provided in which a carriage (36) is guided and which is configured to define a pivoting movement of the tabletop element (24) relative to the support element (22) when the carriage (36) moves along the guide track (34), **characterized in that** the guide track (34) comprises at least two sections (44, 46), each defining a partial pivoting movement of the table device (10), wherein the first section (44) defines a pivoting movement of the table relative to the holding device (20) about the rotation axis (28), during which the orientation of the tabletop element (24) relative to the support element (22) remains unchanged, and the second section (46) defines a pivoting movement of the tabletop element (24) about the pivot axis (26) relative to the support element (22).

2. Table device (10) according to claim 1, **characterized in that** the carriage (36) guided in the guide track (34) is held on the tabletop element (24) via a connecting element (40) that is pivotable relative to the carriage (36) and relative to the tabletop element (24).

3. Table device (10) according to one of the preceding claims, **characterized in that** in the first section (44), a distance of the guide track (34) to the rotation axis (28) is constant, and in the second section (46), the guide track (34) along an adjustment direction of the carriage (36) in the guide track (34) from the first section (44) to the second section (46) approaches the rotation axis (28).

4. Table device (10) according to one of the preceding claims, **characterized in that** the tabletop element (24) comprises a rotation device (56), via which a tabletop (58) providing the table surface (12) of the tabletop element (24) can be pivoted relative to the support element (22) about a rotation axis (60), which is oriented obliquely to the pivot axis (26).

5. Table device (10) according to one of the preceding claims, **characterized in that** the guide track (34) has a branch (48) at one end assigned to at least one use position (18), via which different use positions (18) are defined.

6. Table device (10) according to claim 5, **characterized in that** a spring device is provided, which is configured to apply a spring force to the carriage (36), whereby when the carriage (36) is moved to the end assigned to the use position (18), a first use position (18) is set without overcoming the spring force, and when the spring force is overcome, a second use position (18) different from the first use position (18) is set.

7. Table device (10) according to one of the preceding claims, **characterized in that** a drive device (30) is provided, which is configured to adjust the table device (10) between the stowage position (16) and the at least one use position (18) upon detecting an actuation of an actuation element.

8. Table device (10) according to one of the preceding claims, **characterized in that** the holding device (22) is a center console for a motor vehicle.

## Revendications

1. Dispositif de table (10) pour un véhicule, comprenant une table réglable entre au moins une position d'utilisation (18) et une position de rangement (16), laquelle comprend un élément de plateau de table (24) fournissant une surface de table (12) en position d'utilisation (18), et un élément de support (22) auquel l'élément de plateau de table (24) est fixé, ainsi qu'un dispositif de maintien (20) auquel l'élément de support (22) est fixé, ledit élément de support (22) étant conçu pour être pivoté par rapport à l'élément de maintien (20) autour d'un axe de rotation (28), et l'élément de plateau de table (24) étant conçu pour être pivoté par rapport à l'élément de support (22) autour d'un axe de pivotement (26) incliné par rapport à l'axe de rotation (28), une coulisse de guidage (34) étant prévue dans laquelle un chariot (36) est guidé et qui est conçue pour définir un mouvement de pivotement de l'élément de plateau de table (24) par rapport à l'élément de support (22) lors du déplacement du chariot (36) dans la coulisse de guidage (34), **caractérisé en ce que** la coulisse de guidage (34) comprend au moins deux sections (44, 46), chacune définissant un mouvement de pivotement partiel du dispositif de table (10), la première section (44) définissant un mouvement de pivotement de la table par rapport au dispositif de maintien (20) autour de l'axe de rotation (28), pendant lequel l'orientation de l'élément de plateau de table (24) par rapport à l'élément de support (22) reste inchangée, et la deuxième section (46) définissant un mouvement de pivotement de l'élément de plateau de table (24) autour de l'axe de pivotement (26) par rapport à l'élément de support (22).

2. Dispositif de table (10) selon la revendication 1, **caractérisé en ce que** le chariot (36) guidé dans la coulisse de guidage (34) est maintenu sur l'élément de plateau de table (24) via un élément de liaison (40) pivotable par rapport au chariot (36) et par rapport à l'élément de plateau de table (24).

3. Dispositif de table (10) selon l'une des revendications précédentes, **caractérisé en ce que** dans la première section (44), une distance de la coulisse de guidage (34) à l'axe de rotation (28) est constante, et dans la deuxième section (46), la coulisse de guidage (34) le long d'une direction de réglage du chariot (36) dans la coulisse de guidage (34) de la première section (44) à la deuxième section (46) se rapproche de l'axe de rotation (28).

4. Dispositif de table (10) selon l'une des revendications précédentes, **caractérisé en ce que** l'élément de plateau de table (24) comprend un dispositif de rotation (56), via lequel un plateau de table (58) fournissant la surface de table (12) de l'élément de plateau de table (24) peut être pivoté par rapport à l'élément de support (22) autour d'un axe de rotation (60), lequel est orienté obliquement par rapport à l'axe de pivotement (26).

5. Dispositif de table (10) selon l'une des revendications précédentes, **caractérisé en ce que** la coulisse de guidage (34) présente une branche (48) à une extrémité associée à au moins une position d'utilisation (18), via laquelle différentes positions d'utilisation (18) sont définies.

6. Dispositif de table (10) selon la revendication 5, **caractérisé en ce qu'**un dispositif de ressort est prévu, lequel est conçu pour appliquer une force de ressort au chariot (36), de sorte que lors du déplacement du chariot (36) vers l'extrémité associée à la position d'utilisation (18), une première position d'utilisation (18) est définie sans surmonter la force de ressort, et lors du dépassement de la force de ressort, une deuxième position d'utilisation (18) différente de la première est définie.

7. Dispositif de table (10) selon l'une des revendications précédentes, **caractérisé en ce qu'**un dispositif d'entraînement (30) est prévu, lequel est conçu pour régler le dispositif de table (10) entre la position de rangement (16) et au moins une position d'utilisation (18) lors de la détection d'une activation d'un élément d'actionnement.

8. Dispositif de table (10) selon l'une des revendications précédentes, **caractérisé en ce que** le dispositif de maintien (22) est une console centrale pour un véhicule automobile.
